(19) **Europäisches Patentamt European Patent Office Office européen des brevets**

(11) **EP 3 701 679 B1**

(12) **EUROPEAN PATENT SPECIFICATION**

(45) Date of publication and mention
of the grant of the patent:
**27.07.2022 Bulletin 2022/30**

(51) International Patent Classification (IPC):
**H04L 41/0826** (2022.01)   **H04L 41/142** (2022.01)
**H04L 41/14** (2022.01)   **H04L 41/16** (2022.01)
**H04L 41/5019** (2022.01)

(21) Application number: **18808230.9**

(22) Date of filing: **06.11.2018**

(52) Cooperative Patent Classification (CPC):
**H04L 41/145; H04L 41/0826; H04L 41/142;**
**H04L 41/16; H04L 41/5019**

(86) International application number:
**PCT/EP2018/080292**

(87) International publication number:
**WO 2020/094213 (14.05.2020 Gazette 2020/20)**

(54) **NETWORK RESOURCE ALLOCATION**

ZUWEISUNG VON NETZWERKRESSOURCEN

RÉPARTITION DES RESSOURCES DU RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.09.2020 Bulletin 2020/36**

(73) Proprietor: **Huawei Technologies Co., Ltd.
Guangdong 518129 (CN)**

(72) Inventors:
• **MILENOVIC, Aleksandar
  80992 Munich (DE)**
• **HUANG, Xiaofang
  80992 Munich (DE)**
• **BENAVIDES, Avelino
  80992 Munich (DE)**
• **AGAPITOS, Alexandros
  80992 Munich (DE)**

(74) Representative: **Isarpatent
Patent- und Rechtsanwälte Barth
Charles Hassa Peckmann & Partner mbB
Postfach 44 01 51
80750 München (DE)**

(56) References cited:
**EP-A2- 1 693 748**   **US-A1- 2016 212 017**
**US-B1- 8 458 715**

**Description**

TECHNICAL FIELD

The disclosure relates to a field of wireless radio communications, and more particularly to a network device and a procedure for allocating network resources. Furthermore, the disclosure relates to corresponding methods and a computer program.

BACKGROUND

Many network services in, for example mobile, fixed, internet of things, IoT, and cloud networks need to be monitored and assured for compliance with the service level agreement, SLA. The SLAs of services may be defined in terms of key performance indicators, KPIs. Network resources, such as radio, core, and transport resources, are shared and limited. Therefore, there is a need for planning in order to allocate network resources, among the competing services in such a way that SLAs are not violated. Planning of resource allocation can be performed by means of a prediction and optimization models.

A significant problem in the management of the prediction models is that of model selection and hyperparameter tuning in the case where the system needs to be extended with prediction models on new types of time-series data representing new service KPIs. A significant problem in the management of optimisation models for exact solvers is that the mathematical formulation may need to be reconfigured and retested for scalability when the network and/or service environment changes. In the case where heuristic or meta-heuristic approaches are preferred, then heuristics may need to be manually tailored to the problem instance under consideration.

EP 1 693 748 A2 discloses managing resources in a computing device to facilitate the allocation of resources amongst competing clients operating on the device.

SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an objective to provide a network device and a method for network resource allocation in a communication network. The objective is achieved by the features of the independent claims. Further implementation forms are provided in the dependent claims, the description and the figures. The invention is defined by the attached claims.

Many of the attendant features will be more readily appreciated as they become better understood by reference to the following detailed description considered in connection with the accompanying drawings.

DESCRIPTION OF THE DRAWINGS

The present description will be better understood from the following detailed description read in light of the accompanying drawings, wherein:

FIG. 1 illustrates a schematic representation of a network device configured to perform network resource allocation according to an embodiment;
FIG. 2 illustrates a schematic representation of an expression tree of a genetic program according to an embodiment;
FIG. 3 illustrates a schematic representation of an expression tree of a genetic program according to another embodiment;
FIG. 4 illustrates a schematic representation of an expression tree of a genetic program according to another embodiment;
FIG. 5 illustrates a schematic representation of an expression tree of a genetic program according to another embodiment;
FIG. 6 illustrates a schematic representation of pseudocode for generating a random genetic program according to an embodiment;
FIG. 7 illustrates a schematic representation of a subtree mutation of a genetic program according to an embodiment;
FIG. 8 illustrates a schematic representation of point mutation of a genetic program according to an embodiment;
FIG. 9 illustrates a schematic representation of a network resource allocation system according to an embodiment;
FIG. 10 illustrates a schematic representation of an online modeller according to an embodiment;
FIG. 11 illustrates a schematic representation of a flow chart of a method according to an embodiment;
FIG. 12 illustrates a schematic representation of a search tree according to an embodiment;
FIG. 13 illustrates a schematic representation of pseudocode for allocating network resource according to an embodiment; and
FIG. 14 illustrates a schematic representation of a flow chart for network resource allocation in a simulation-based planner according to an embodiment.

Like references are used to designate like parts in the accompanying drawings.

DETAILED DESCRIPTION

The detailed description provided below in connection with the appended drawings is intended as a description of the embodiments and is not intended to represent the only forms in which the embodiment may be constructed or utilized.

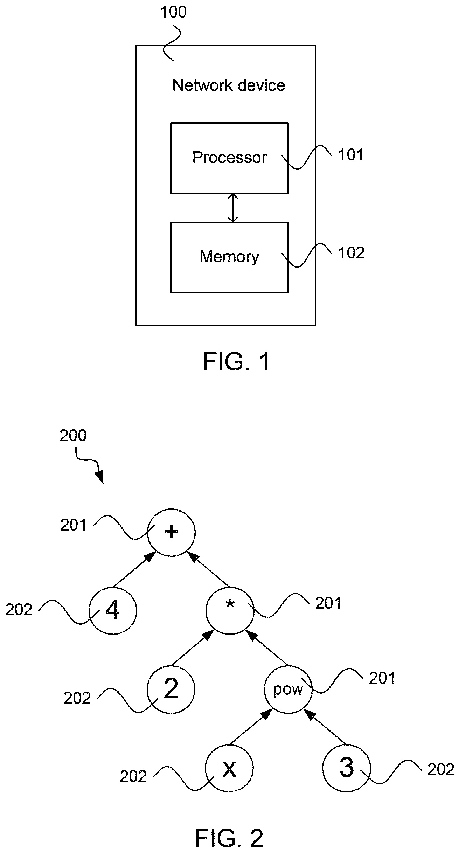

FIG. 1 schematically illustrates a network device 100 configured to perform network resource allocation according to an embodiment. The network device 100 comprises at least one processor 101 and at least one memory 102. The network device 100 may be configured to perform the functionalities and operations relating to it as described in the embodiments.

The network device 100 may further comprise other components that are not illustrated in FIG. 1. The network device 100 may further comprise, for example, a transceiver, and the network device 100 may be configured to communicate with other devices in the communication network using the transceiver. The network device 100 may communicate with other devices using, for example, an Ethernet or any other wired, wireless, or fibre optic connection.

The network device 100 may be any device that can process information, for example, using the processor 101. The network device 100 may be, for example, a server, or the network device 100 may be implemented on a server. The network device 100 may be implemented, for example, using a computer or a plurality of computers, such as a data centre. Alternatively, a computer or a plurality of computers may implement a plurality of network devices 100 using, for example, virtualisation, wherein the network device 100 may be implemented in software. In some embodiments, the network device 100 may be referred to as a network node. A single physical device, such as a computer, may implement a plurality of network nodes.

The network device 100 is configured to allocate network resources in a communication network according to a current state. The network device 100 may be further configured to determine a plurality of permissible actions from the current state, wherein each action in the plurality of permissible actions comprises a change to the current state. The network device 100 may be further configured to simulate a plurality of state paths for each action in the plurality of permissible actions, wherein each state path in the plurality of state paths comprises a plurality of consecutive actions and calculate a cost value for each action in the plurality of permissible actions based on the corresponding plurality of state paths. The network device 100 may then choose an action from the plurality of permissible actions based on the cost value of each action in the plurality of permissible actions and transition to a new state by performing the chosen action. The network device 100 can then allocate the network resources in the communication network according to the new state.

The current state can represent the resources that are allocated for each service in the communication network. The permissible actions can be constrained, for example, by these services and also by the maximum capacity of each compute or network resource. The current state is represented by a state variable vector, wherein the state variable vector comprises at least one of: a plurality of key performance indicator, KPI, values representing a service level agreement, SLA, in a plurality of services; number of service requests for each service in the plurality of services; and number of resources allocated to each service in the plurality of services. Similarly, the new state or any other state may be represented by a state variable vector as described above.

Network device 100 is further configured to calculate a cost value for each action in the plurality of permissible actions by predicting the cost associated with each action in the plurality of consecutive actions. Based on the cost value of each action, the network device 100 chooses the appropriate action to take. The chosen action may, for example, correspond to the smallest cost value.

The network device 100 may be configured for autonomous and proactive SLA assurance of network services. The network device 100 may implement dynamic resource allocation in radio, core and/or transport networks as described in the embodiments herein. The network device 100 may implement network slice management for various networks, such as 5G mobile, fixed, internet of things, and cloud networks.

It is an objective to provide an adaptive resource allocation system for the purposes of SLA assurance that can be widely applied to any type of network, such as 5G NR, IoT, cloud etc. In order to automatically adapt to new unknown environments, in terms of new service types and resource infrastructure topologies, a resource allocator can take the form of a simulation-based planner which can be implemented by the network device 100 as described in the embodiments. The simulation-based planner can use machine learning to generate state-transition models for simulating state paths. The simulation-based planner can adapt a rollout policy used for choosing resource allocation actions during simulations.

A system is disclosed that can automatically adapt learning and optimization models when services are added or resource infrastructure topology changes, in order to meet SLA requirements. The system can achieve automatic adaptation based on an online modeller and/or a simulation-based planner that can work in cooperation. The online modeller can learn state-transition models that can be used in decision-time planning by the simulation-based planner. Based on a service inventory, prediction models of service demand and SLA KPIs are built and maintained using machine learning. Prediction models can be updated online using real-time data.

The simulation-based planner can perform decision-time planning. The simulation-based planner can perform simulations of state paths based to provide an approximate solution to the dynamic programming problem over a finite planning horizon. The simulation-based planner can estimate cost/reward values by averaging the returns of a collection of sampled/simulated state paths. The state paths can start with each permissible action in response to a decision-time state. The simulation-based planner can follow a self-adaptive rollout policy. A state path can comprise as a series of interactions between a state-transition model, also referred to as a simulation model, and a rollout policy that chooses actions in response to a given system state. The actions may correspond to resource allocation actions in a communication network. A state path may also be referred to as a trajectory.

A significant advantage of simulation-based planning over other approximate solutions for dynamic programming problems may be that it can avoid the need of globally approximating a function over either the state space or the state-action space. This may be an important requirement for a planning system that is able to adapt to an ever-changing profile of services and/or resource infrastructure topologies without the need of major re-training of function approximations that may result when the representation of services or resources changes.

The evolutionary simulation-based planner implemented by the network device 100 can implement a rollout algorithm enhanced with machine learning to quickly adapt the rollout policy during simulated trajectories towards a policy that samples high-return state paths. Starting from a current state, also referred to as a start state, the network device 100 can simulate a plurality of trajectories of state-action pairs until the end of a planning horizon. Cost/reward values can be estimated by averaging the returns of many simulated trajectories that start with each permissible action from the current state and then follow the given rollout policy. When the cost/reward value estimates are considered to be accurate enough, the action having the highest estimated reward and/or lowest estimated cost can be executed, after which the process can be carried out anew from the resulting new state. Simulation models can comprise service demand prediction models and SLA KPI prediction models trained using the online modeller.

An evolutionary algorithm is an iterative stochastic search algorithm for searching spaces of arbitrary objects, where the search process is loosely modelled after the biological process of natural selection, also referred to as the survival of the fittest. The procedure for solving a problem using an evolutionary algorithm may be represented using the following operations:

- Define a representation (i.e. hypothesis) space in which candidate solutions can be specified.
- Define a fitness criterion for quantifying the quality of a solution.
- Define variation operators (e.g. mutation, crossover) for generating offspring from a parent solution or a set of parent solutions.
- Define the parent solution selection (e.g. fitness-proportionate, tournament, rank) and replacement policy (e.g. generational, steady-state).
- Iterate the process of Fitness Evaluation -> Selection -> Variation -> Replacement.

A Genetic Program is a function composition represented using a directed acyclic graph structure which can be amenable to evolutionary modification. A function composition is the point-wise application of one function to the result of another one to produce a third function. For example, given three functions:

$$f: \mathbb{R} \to \mathbb{R} \ \text{ given by } f(x, y) = x + y$$

$$g: \mathbb{R} \to \mathbb{R} \ \text{ given by } g(x, y) = x \times y$$

$$h: \mathbb{R} \to \mathbb{R} \ \text{ given by } h(x, y) = x^y$$

The genetic program w(x) = 4 + 2 × (pow(x, 3)), where pow($x,y$) = $x^y$, can be formed by the composition *of f, g, h* as follows:

$$w(x) = f\left(4, g\left(2, h(x, 3)\right)\right).$$

This can be represented as a directed acyclic graph, also known as an expression tree. An expression tree can be evaluated in a feed-forward fashion starting from the leaf nodes.

FIG. 2 illustrates a schematic representation of an expression tree according to an embodiment. This expression tree 200 may correspond to the genetic program presented above. The expression tree 200 comprises branch nodes 201 and leaf nodes 202. Each branch node 201 may have one or more child nodes. The child nodes may be branch nodes 201 or leaf nodes 202, and the value of a branch node 201 may be evaluated using the child nodes.

Genetic programs can be generated as function compositions using a set of functions F and a set of terminals *T*. Elements of the function set are the primitive building blocks, i.e. functions, of a function composition. Elements of the terminal set represent constants and variables of a function composition. In an expression tree 200, the functions may correspond to branch nodes 201, and the terminals may correspond to leaf nodes 202. Child nodes of a branch node 201 represent the arguments of the function corresponding to the branch node 201. Herein, the terms genetic program and expression tree may be used interchangeably. For example, mutations of an expression tree may be referred to as mutations of the corresponding genetic program.

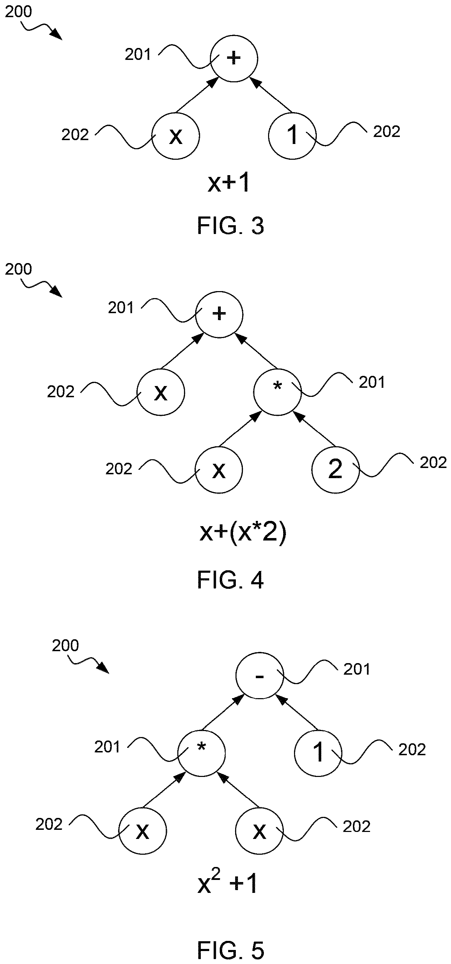

FIGs. 3 - 5 illustrate schematic representations of expression trees of genetic programs and corresponding genetic programs according to embodiments. The corresponding genetic programs w(x) can be constructed using a function set F = {f(a, b) = a + b, g(a, b) = a-b, h(a,b) = a × b} that comprises the arithmetic functions of addition, subtraction and multiplication, and a terminal set $T = \{x, 1, 2\}$ that comprises the input-variable $x$ and the constants 1 and 2.

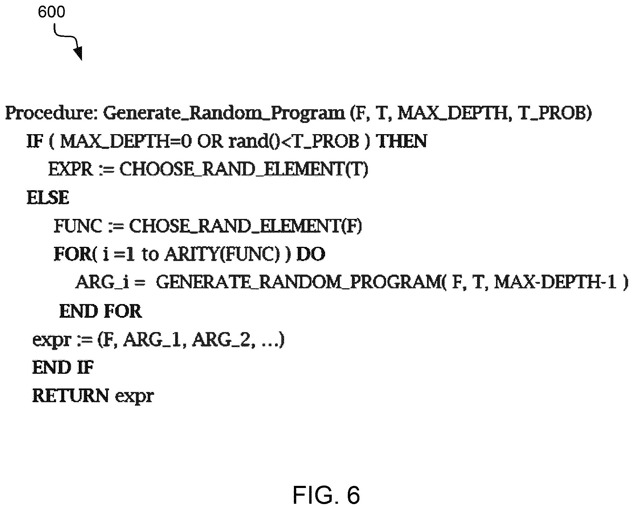

FIG. 6 illustrates a schematic representation of pseudocode 600 configured to generate a random genetic program according to an embodiment. Given function (F) and terminal (T) sets of primitive elements, a maximum depth (MAX_DEPTH) of the expression tree, and the probability of selecting a terminal node (T_PROB), a random genetic program can be generated.

The function rand() selects a real-valued number uniform-randomly in the interval [0.0,1.0]. The function CHOOSE_RAND_ELEMENT() choses an element uniform-randomly from within the set supplied as argument to the function invocation. The function ARITY() takes an element of the function set as argument and returns the arity of the function. For example, $f(a,b) = a + b$ has an arity of 2, where $\log(a)$ has an arity of 1.

Genetic programs can be amenable to evolutionary modification. In the following embodiments, three variation operators that can be applied as evolutionary modifications to genetic programs are presented. The variation operations are subtree mutation, point mutation, and subtree crossover.

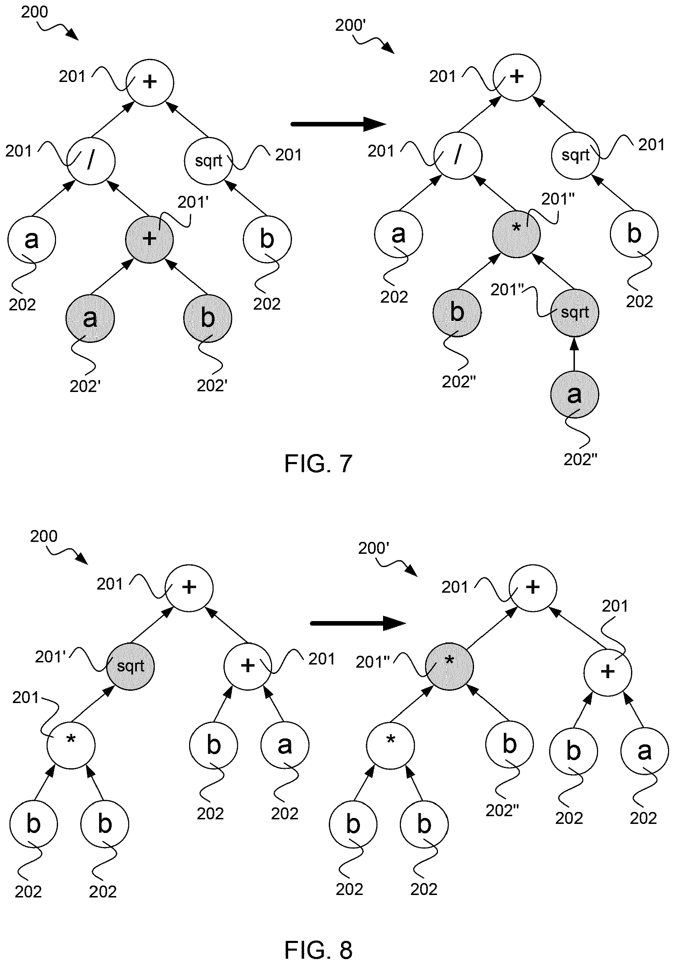

FIG. 7 illustrates a schematic representation of a subtree mutation of a genetic program according to an embodiment. The subtree mutation operator operates on a single parent tree 200. The operator selects a node at random from the parent tree 200 and generates an offspring tree 200' by replacing the subtree rooted at the selected node 201' with a randomly generated subtree. The randomly generated subtree may be generated, for example, using the random expression tree generation algorithm presented in the pseudo-code of FIG. 6. As can be seen from FIG. 7, the randomly generated subtree does not need to have the same structure as the subtree that is replaced. In this embodiment, the subtree that was replaced comprises one branch node 201' and two leaf nodes 202'. The randomly generated subtree, on the other hand, comprises two branch nodes 201" and two leaf nodes 202". The genetic program corresponding to the parent tree 200 can be expressed as

$$F(a,b) = (a/(a+b)) \times \sqrt{b},$$

and the genetic program corresponding to the offspring tree 200' can be expressed as

$$H(a,b) = (a/(b \times \sqrt{a}) \times \sqrt{b}.$$

A genetic program corresponding to a parent tree may also be referred to as a parent genetic program, and a genetic program corresponding to an offspring tree may be referred to as an offspring genetic program.

FIG. 8 illustrates a schematic representation of a point mutation of a branch node of a genetic program according to an embodiment. The point mutation operator operates on a single parent expression tree 200. The operator selects a tree node 201' at random in the parent tree 200 and generates an offspring tree 200' by replacing the selected node 201' with a randomly selected function from the function set (in case of a branch node 201), or with a randomly selected terminal from the terminal set (in case of a leaf node 202). In the embodiment of FIG. 8, the point mutation operator selects a branch node 201' and replaces the branch node 201' by a branch node 201" corresponding to a different function. Since the arity of the new branch node 201" is different from the arity of the original branch node 201', a new leaf node 202" may need to be generated. This may ensure the correct number of arguments in the offspring tree 200' for the new branch node 201".

The subtree crossover operator can operate on two parent expression trees. The operator selects a random subtree from both parent expression trees and interchanges the subtrees between the parent expression trees. Thus, the subtree crossover operator produces two offspring expression trees.

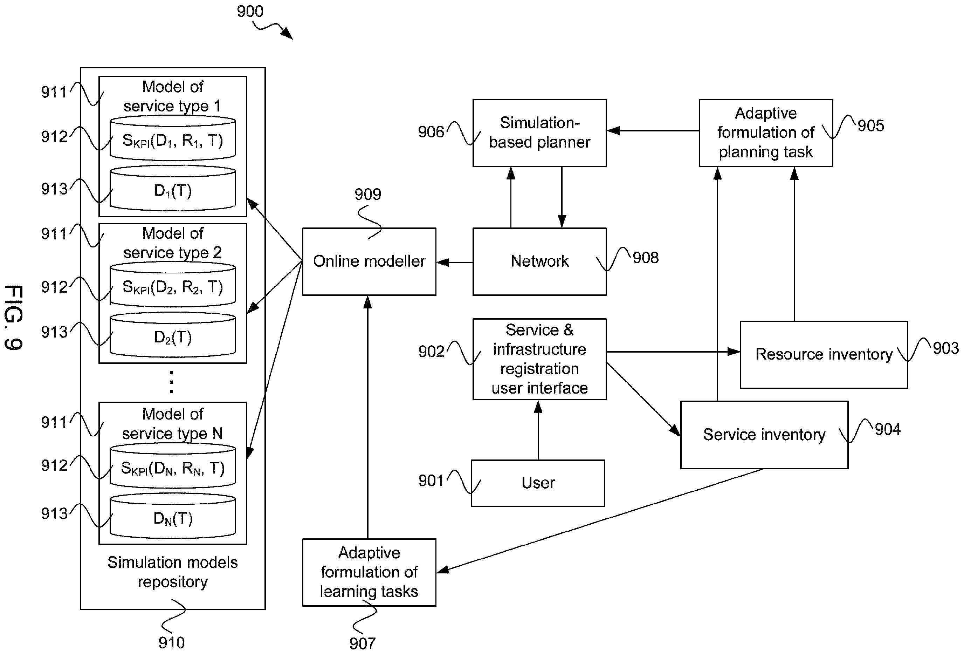

FIG. 9 illustrates a schematic representation of a network resource allocation system 900 according to an embodiment. Components 902 - 913 of the network resource allocation system 900 can allocate resources in a communication network 908. The components 902 - 913 may also deduce how the network resources should be allocated as described in the embodiments. Some components of the system 900 may be implemented by the network device 100. According to an embodiment, functionality of the simulation-based planner 906 is implemented by the network device 100. In some embodiments, functionality of other components may also be implemented by the network device 100. In some embodiments, functionality of some components may be implemented in other devices, and these devices may communicate with the network device 100.

A user 901 can register an SLA specification and a resource infrastructure specification to the system 900 using a service & infrastructure registration user interface 902. Information about network resources can be saved into a resource inventory 903, and information about services can be saved into a service inventory 904. The service inventory 904 can comprise a repository of services. These services may be currently running in the communication network. Each service can comprise an associated SLA specification in terms of threshold values. The threshold values may be expressed, for example, in terms of key performance indicators, KPIs.

The resource inventory 903 can specify the resource infrastructure topology. For example, a network infrastructure (NI) that should instantiate the services can be expressed as a directed graph $G(NI) = (V^I, A^I)$ in which each node p in the set $V^I$ represents a physical host, and each arc $(p, q)$ in the set $A^I$ represents the physical network connection between hosts $p$ and $q$. A set of node resource types NT can be associated to the nodes of the *G*(*NI*) graph. Each member of the NT set can represent a particular resource (e.g. processing power, number of CPUs, number of GPUs, memory, storage), a subset of which can be required by a particular virtual network function, VNF, type. $RA_u^j$ is associated to each physical host in NI and represents the amount of aggregate resource of type *j* available in the physical host *u*. A set of link resource types LT can be associated to the links of *G*(*NI*) graph. Each member of the set LT represents a particular resource (e.g. bandwidth). $RA_{pq}^j$ is associated to each physical link *(p, q)* in *G*(*NI*), *j* ∈ *LT,* and it represents the amount of resource available in *(p,* q) .

An adaptive formulation of learning tasks component 907 can update automatically the formulation of training examples, in terms of explanatory variables and resource variable, for service demand prediction and service SLA KPI prediction for service types in the service inventory 904.

Adaptive formulation of planning tasks component 905 can update automatically the formulation (decision variables and constrains on resource capacity) of the optimization model based on changes in the service inventory 904 and the resource inventory 903.

The simulation-based planner 906 can generate a resource allocation plan. The dynamic optimisation can be based on the simulation-based planner 906 driven by the prediction models that can be retrieved from the simulation models repository 910, and the planning task formulation supplied by the adaptive formulation of planning task component 905. The simulation-based planner 906 can retrieve the prediction models via the network 908.

The online modeller 909 can maintain up-to-date simulation models *S(D, R, T)* 912 and *D(T)* 913 for every service type in the service inventory 904. The models 911 can be stored in the simulation models repository 910.

The simulation models repository 910 can comprise a model 911 for each service type. Each service type model 911 can comprise a SLA KPI prediction model 912 $S_{KPI}(D_{Service},R_{Service},T)$. The SLA SKPI 912 model can predict an SLA KPI for the corresponding service as a function of service demand $D_{service}$, resources $R_{service}$ allocated to the service, and time *T*. The service type model 911 may further comprise a demand prediction model 913 $D_{Service}(T)$. The demand prediction model 913 can predict the demand of the corresponding service type, for example in terms of number of service users, at a time *T*.

$S_{KPI}$ may comprise an SLA KPI value (e.g. an availability percentage) at a time t. $D_{service}$ may comprise the number of service users for a service at a time *t*. $R_{service}$ may comprise the amount of resources, such as compute, storage, memory, network resources, that are allocated to a service at a time t. Herein, the service subscript can be assumed implicitly. Thus, the simulation models 912, 913 take the form of *S(D, R, T)* and *D(T).*

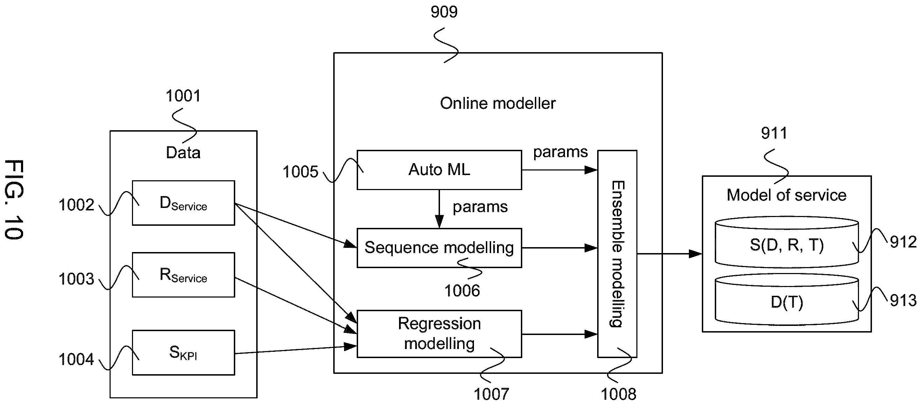

FIG. 10 illustrates a schematic representation of the online modeller 909 according to an embodiment. The online modeller 909 may be responsible for generating and maintaining up-to-date committees of simulation models *S(D, R, T)* 912 and *D(T)* 913 for every SLA KPI and every type of service. In the process of online learning (both in standalone and ensemble models), the online modeller 909 can provision for automatic hyperparameter tuning and feature selection.

According to an embodiment, the SLA KPI prediction model 912 and/or the service demand prediction model 913 is generated using sequence modelling and/or regression modelling. According to a further embodiment, the sequence modelling comprises at least one of: recurrent neural networks; autoregressive integrated moving average; and hidden Markov model; and wherein the regression modelling comprises at least one of: multilayer feed-forward neural networks; genetic programming; and non-linear basis function expansion. The SLA KPI prediction model 912 and the service demand prediction model 913 may be generated by the online modeller 909. The online modeller 909 may be implemented by the network device 100 or by some other device or devices that can communicate with the network device 100.

Service demand data $\{D_s^t\}_{t=1}^T$ 1002 can be a sequence of *T* values for the demand of services at time t, where $D_s^t \in \mathbb{R}$ . The service demand data 1002 may be collected from the network 908. The service demand data 1002 can be measured in terms of number of service users. Given the service demand data 1002 in a form of a training set, the sequence modelling subcomponent 1006 comprised in the online modeller 909 can provide a family of machine learning algorithms, such as recurrent neural network, autoregressive integrated moving average, ARIMA, and hidden Markov model, for online learning of service demand models 913.

$$\left\{\left(X_t, S_{KPI}^{s,t}\right)\right\}_{t=1}^T$$

Furthermore, data     1001 can be a set of training examples of size *T,* where $X_t \in \mathbb{R}^n$ is a vector of explanatory variables comprising service demand $D_s^t \in \mathbb{R}$ 1002 and resources $R_s^t \in \mathbb{R}^m$ 1003 allocated to the service s at a time t, and where $S_{KPI}^{s,t} \in \mathbb{R}$ 1004 is the response variable representing an SLA KPI for service s at a time t. The regression modelling subcomponent 1007 comprised in the online modeller 909 can provide a family of non-linear regression algorithms, such as multi-layer feed-forward neural networks, genetic programming, and non-linear basis function expansion, for online learning of SLA KPI models 912.

The ensemble modelling subcomponent 1008 can provide a family of ensemble modelling algorithms, such as bagging, boosting, and random forests, for improving generalisation performance of standalone models built using the sequence modelling 1006 and/or regression modelling 1007 subcomponents. The AutoML subcomponent 1005 can provide a family of algorithms for automated hyper-parameter tuning, such as an evolutionary algorithm, and feature selection, such as wrapper methods, filter methods, and greedy heuristics, used in sequence modelling 1006, regression modelling 1007, and ensemble modelling 1008 subcomponents.

The problem of dynamic resource allocation for SLA assurance in a communication network can be formulated as a state space planning problem. A state in the state space may correspond to allocation of resources in the communication network. An action may correspond to a transition from one state to another state in the state space. Thus, an action may correspond to a change in the resource allocation. The network device 100 can utilise an approximate dynamic programming framework for the resource allocation.

A state variable may comprise all the information needed to make a decision, as well as information that is needed to describe how the network evolves over time. The state variable may also be referred to as a state variable vector. The state variable can be represented by a $(n + m + k)$-dimensional real-valued vector comprising $SLA_{KPI}^{t} \in \mathbb{R}^n$, $D^t \in \mathbb{R}^m$, and $R^t \in \mathbb{R}^k$.

$SLA_{KPI}^{t} \in \mathbb{R}^n$ can represent SLA KPIs, where $n$ is the number of different SLA KPIs, $D^t \in \mathbb{R}^m$ can represent the number of service requests, where $m$ is the number of service types currently running, and $R^t \in \mathbb{R}^k$ can represent the number of resources allocated to different services, where k is the number of different resource types.

An action variable can represent how the allocation of resources is controlled. An action variable may also be referred to as a decision variable. An action can be denoted by a vector that indicates the fraction of resources out of the overall resources of the infrastructure that are allocated to each service type at a particular time. A pre-decision state $s_t$ can be defined as the state variable before a chosen action is taken, and a post-decision state $s_t^a$ can be defined as the state variable after chosen action $\alpha$ is taken at a time t.

In the state-transition model, the properties of the network evolve along discrete time steps. The properties may comprise, for example, resource allocation, service demand etc. At each time-step t, the network is in state $s_t$. On that basis, a rollout policy $\pi$ chooses an action $a_t \in A(s)$, where $A(s)$ is a set of permissible actions in the state s. One time-step later, in part as a consequence of the action $\alpha_t$ and in part as a random disturbance, a numerical reward $r_{t+1} \in \mathbb{R}$ is fed back, and the network transitions to state $s_{t+1}$. In some embodiment, the random disturbance may be omitted. A state-transition model determines how the properties of the network evolve from a state $s_t$ at time t to a state $s_{t+1}$ at time t + 1 given the action $a_t$ at time t and a random disturbance that occurred between t and t + 1.

SLA KPI prediction model $S(D, R, T)$ predicts SLA KPI as a function of service demand and resources allocated to the service at a specific time for all SLA KPIs and all service types. The demand prediction model $D(T)$ predicts the service demand as a function of time for different service types. A simulation, a simulated trajectory, or a state path can be defined as an ordered sequence of consecutive states, actions, and rewards: $s_t$, $a_t$, $r_t$, $s_{t+1}$, $a_{t+1}$, $r_{t+1}$, ⋯ , $s_T$, $a_T$, $r_T$. Intermediate rewards $r_t$ can be set to zero, and the final reward $r_T$ may only be taken into account at the end of the planning horizon. A planning horizon may be defined in terms of a number of actions and/or states in a state path. The rewards $r_t$ may be calculated based on the SLA KPI prediction model and the service demand model. For example, if allocation of resources in a state comply well with SLAs, the reward can be high compared to if the resource allocation does not comply with SLAs.

According to an embodiment, the network device 100 is configured to calculate the cost value for each action in the plurality of permissible actions based on a KPI value at an end of each state path in the corresponding plurality of state paths. The cost value of each action in the plurality of permissible actions can be determined based on a service level agreement, SLA, and a corresponding KPI. This determination can be done, for example, by the network device 100, or by some other device. The online modeller 909 may be configured to determine the cost value of each action in the plurality of permissible actions based on a service level agreement, SLA, and a corresponding KPI. For example, if another device implements the online modeller 909, that device may be configured to perform this determination.

According to an embodiment, the cost value for each action in the plurality of permissible actions is calculated using a service SLA KPI prediction model 912 and a service demand prediction model 913.

Cost/reward function can specify the costs that should be minimised, or the rewards that should be maximised. The cost function can be defined as a function of the violation of SLAs for different services. As a person skilled in the art can appreciate, any embodiment described herein may be described in terms of rewards or costs, and their description may be considered equivalent.

According to an embodiment, the network device 100 is further configured to form a probability distribution over the plurality of permissible actions based on the cost value of each action in the plurality of permissible actions and choose the action using the probability distribution.

According to another embodiment, the network device is further configured to choose the plurality of consecutive actions in each state path in the plurality of state paths according to the probability distribution.

A rollout policy $\pi$ can be defined as a mapping from states to a probability distribution over all permissible actions $a \in A(s)$ responsive to state $s$. $\pi$ can correspond to a probability distribution over the permissible actions $A(s)$. Given a state, an arbitrary action can be chosen by sampling $n$. A state-value function of a state s under $n$, denoted by $v_\pi(s)$, can be defined as the expected cost/reward when starting in s and following $\pi$ thereafter until the end of the planning horizon of size K time-steps as follows:

$$v_\pi(s) = \mathbb{E}_\pi \left[ \sum_{k=0}^{K} \gamma^k r_{t+k+1} \right],$$

where $\mathbb{E}_\pi$ denotes the expected value with respect to policy $n$, and $\gamma \in [0.0, 1.0]$ is a discount factor that gives higher influence on immediate rewards than longer-term ones. Given states and an enumeration of the permissible actions $A(s)$ then the state-value function can be used to select actions by using the following procedure:

1. Generate all permissible post-decision states $s^{a_i}$, $\forall a_i \in A(s)$.
2. Compute the state-value $v_\pi(s^{a_i})$ for every post-decision state $s^{a_i}$.
3. Select action $a_i$ that results in the post-decision state with the highest state-value (for maximisation problems).

The evolutionary simulation-based planner can provide an approximation of the state-value function presented the equation above. Given starting states, an action $a$, and a post-decision state $s^a$, the expectation of the equation above can be approximated by averaging the cost/reward of several simulated state paths that are generated from the simulation models interacting with a rollout policy.

A relative strength function $\hat{v}_w : \mathbb{R}^{n+m+k} \rightarrow \mathbb{R}$ can be defined as a parameterised functional form with a genetic program w. The output of the relative strength function for input state s is the output of genetic program w invoked with an argument set to s. The relative strength function can map a post-decision state variable to a scalar representing the relative strength of the action that generated said variable. The relative strength of an action may represent the expected reward of the action. Given a set of permissible actions A (s), the relative strengths of the permissible actions can be mapped to a probability distribution $p(s^{a_i})$ using the softmax function as follows:

$$p(s^{a_i}) = \frac{\exp\left(\hat{v}_w(s^{a_i})\right)}{\sum_{j=1}^{N} \exp\left(\hat{v}_w(s^{a_j})\right)},$$

where $p(s^{a_i})$ is the probability of action $a_i$ given the post-decision state variable $s^{a_i}$, and N the number of permissible actions at pre-decision state s. $v_w(s^{a_i})$ is the output of a genetic program for post-decision input state $s^{a_i}$, and $\exp(x)$ is the exponential function $e^x$. The resulting probability distribution can be used as a rollout policy. An action can be chosen by using the probability distribution $p(s^{a_i})$. For example, the probability distribution $p(s^{a_i})$ can determine the probability of choosing each action.

According to an embodiment, the network device 100 is further configured to form the probability distribution using a genetic program. The network device 100 may be further configured to form the genetic program using an evolutionary algorithm. The evolutionary algorithm may be configured to minimise an approximation of an expectation value of the cost value.

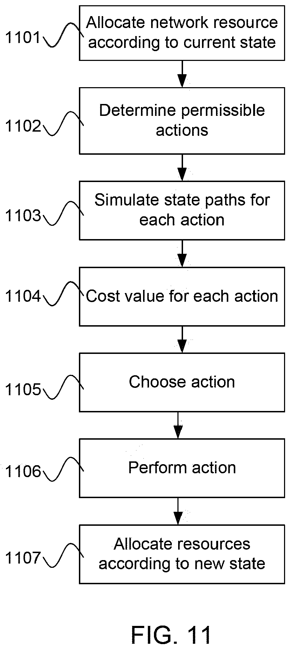

FIG. 11 illustrates a schematic representation of a flow chart of a method according to an embodiment.

At 1101, network resources are allocated in a communication network according to a current state.

At 1102, a plurality of permissible actions are determined from the current state, wherein each action in the plurality of permissible actions comprises a change to the current state.

At 1103, a plurality of state paths are simulated for each action in the plurality of permissible actions, wherein each state path in the plurality of state paths comprises a plurality of consecutive actions.

At 1104, a cost value for each action in the plurality of permissible actions is calculated based on the corresponding plurality of state paths.

At 1105, an action from the plurality of permissible actions is chosen based on the cost value of each action in the plurality of permissible actions.

At 1106, transitioning to a new state by performing the chosen action.

At 1107, the network resources are allocated in the communication network according to the new state.

Operations 1101 - 1107 may be implemented by the network device 100 as discussed in relation to FIG. 1.

In operation 1101, the network resources are allocated according to the current state. This state is represented by a state variable vector as described above.

In operation 1102, the network device 100 determines permissible actions, wherein the actions transitions the current state into a new state. Thus, the actions may cause changes in the allocation of network resources.

In operation 1103, the network device 100 simulates a plurality of state paths for each action. The state paths comprises consecutive actions. Each path comprises consecutive action-state pairs, wherein each action causes a transition into a new state.

In operation 1104, the network device 100 calculates a cost value for each permissible action from the current state based on the simulated paths. For example, a cost value can be calculated by calculating an expectation value for the cost value based on the cost values of the simulated state paths.

In operation 1105, the network device 100 chooses which action to take based on the cost value of each action. For example, as described above, the network device 100 can form a probability distribution based on the cost values. The probability distribution may favour actions that lead to a high reward and/or a low cost. The action can then be chosen based on the probability distribution. In operation 1106, the chosen action is performed, which causes a transition into a new state. Once in the new state, the procedure of FIG. 11 may be performed again in order to transition into a new state.

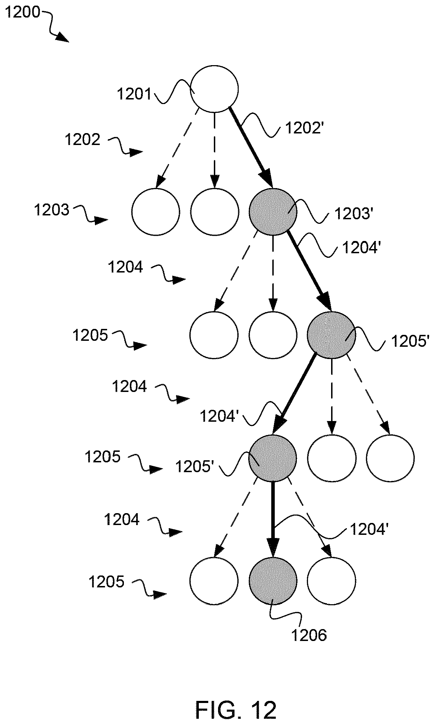

FIG. 12 illustrates a schematic representation of a search tree 1200 according to an embodiment. This search tree may correspond to procedures that the network device 100 may perform in order to allocate network resources as described in the embodiments. The network device 100 may start in a current state 1201, which can be presented as a root node of the search tree 1200. A state may refer to the state of the network. The state may comprise, for example, allocation of the network resource and the demand of different services in the network. In this embodiment, there are three permissible actions 1202 from the current state 1201. This is only an example, and in practical applications, the number of permissible actions 1202 can be significantly higher.

The network device 100 may simulate a state path by choosing an action 1202' from the plurality of permissible actions 1202 and simulating a transition to a new state 1203' according to the chosen action 1202'. After the simulated transition to the new state 1203', the network device 100 may choose another action 1204' from the new permissible actions 1204 and transition again into a new state 1205'. By repeating this process, the network device 100 can simulate a state path. The starting point of the state path may be the state 1203'.

For example, in the embodiment of FIG. 12, a state path may comprise the chosen actions 1204' and the corresponding states 1205'. Simulation of a state path may stop, for example, when a stopping criterion is reached. The stopping criterion may be, for example, the number of actions 1204' and/or states 1205' in the state path. The maximum length of a state path may be referred to as a planning horizon. The last state 1206 of a state path may be referred to as the end of the state plan.

While simulating a state path, the network device 100 may use a probability distribution to choose the next action 1204' in each state 1205' in the state path. The probability distribution may be given by a rollout policy.

The network device 100 simulates a plurality of the aforementioned state paths for each permissible action 1202 from the starting state 1201. The embodiment of FIG. 12 only illustrates one such state path. Since the actions 1202 can be chosen using a probability distribution, each simulation may generate a different state path. For example, for the action 1202', a plurality of state paths may be simulated. The starting for these simulations may be the corresponding post-action state 1203'. Based on the rewards and/or costs of each state path, a cost value may be assigned for the action 1202'. The cost value may be calculated, for example, by averaging the costs of each state path. The cost value of each state path may be deduced, for example, as described in the embodiments herein. A similar process is repeated for the other permissible actions 1202 from the starting state 1201. Each permissible action 1202 may be assigned a relative strength based on the cost values. Based on the relative strength assigned to each permissible action 1202, the network device 100 can choose which state 1203 to transition into.

In addition to choosing the next state 1203 to transition into, the network device 100 may also use the aforementioned state path simulations to optimise the rollout policy and/or the probability distribution. For example, the rollout policy may be formulated using a genetic program. The network device 100 may iterate over a plurality of genetic programs using an evolutionary algorithm. The procedure of simulating a plurality of state paths and choosing the next action may be repeated for each genetic program. The best cost/reward value may be used to represent the fitness of the corresponding genetic program. Based on the fitness of each genetic program, the evolution algorithm may find a genetic program that can generate a good rollout policy.

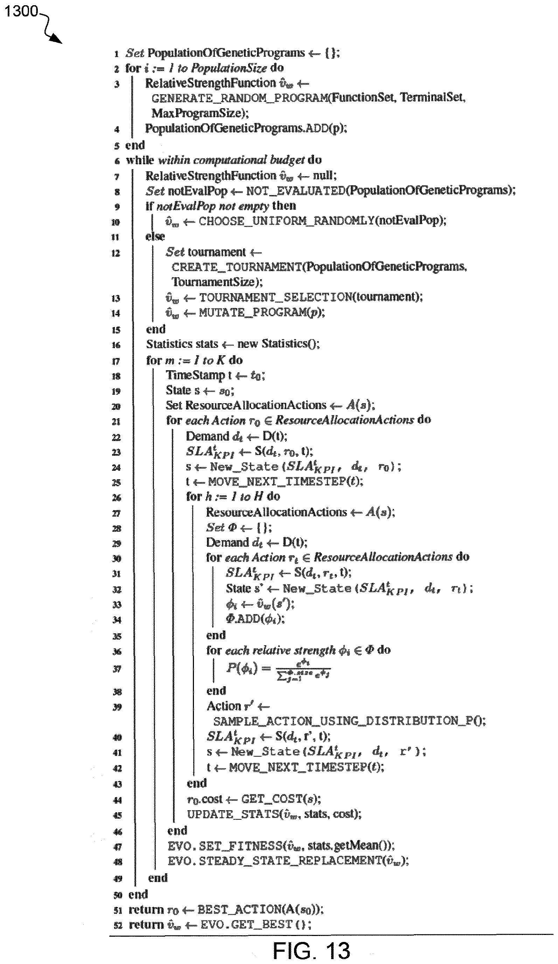

FIG. 13 illustrates a schematic representation of pseudocode 1300 according to an embodiment. Following inputs may be defined: (1) Decision-time state $s_0$, (2) Decision-time $t_0$, (3) Planning horizon window size H, (4) K number of rollout policy fitness evaluations, (5) Set FunctionSet, (6) Set TerminalSet, (7) PopulationSize, (8) MaxProgramSize, (9) TerminalProbability, and (10) TournamentSize. Following outputs can be defined: (1) Action $r_{0}$ at decision time $t_0$, and (b) Relative strength function $\hat{\upsilon}_w(s)$. In the following, functionality of the pseudocode is described:

Line 1: Initialises a data structure (here represented as a set) that will hold a population of genetic programs that are learned by means of an evolutionary algorithm.

Lines 2 - 5: Initialises a population of random genetic programs that parameterise the relative strength functions $\hat{\upsilon}_w(s)$. Given a function set (e.g. arithmetic operators), a terminal set (e.g. state variable defined above, numerical constants), a probability of selecting a terminal node in an expression-tree (e.g. 60%), and a maximum expression-tree depth (e.g. depth of 15), then a random genetic program is generated using the grow algorithm outlined above (Line 3).

Line 6: The while-loop presents the main control loop of the evolutionary simulation-based planner. Here the termination condition is defined as a kind of computational budget, which could be measured in term of elapsed time or as a fixed number of simulations.

Lines 7 - 15: Initialise the evolutionary algorithm mainly responsible for learning a relative strength function $\hat{v}_w(s)$. $\hat{v}_w(s)$ controls the rollout policy of choosing actions responsive to states.

Line 8: Creates a set of random programs from the initial population that haven't been evaluated for fitness yet. Fitness is a real-valued scalar used in the selection process of the evolutionary algorithm.

Lines 9 - 10: Check to see if there are genetic programs in the population that have not yet been evaluated. Then chose one of them at random, and assign it to control the rollout policy.

Lines 12 - 14: If all programs have been evaluated then create a tournament by uniform-randomly choosing a number of programs from the current population (Line 12). The best program, in terms of fitness, wins the tournament and is the subject to a mutation (Line 14) that is implemented as subtree mutation or point mutation described above. The mutated genetic program is then assigned to control the rollout policy.

Line 17: Enables a relative strength function $v_w(s)$ parameterised with genetic program w to be used in K simulations from start state $s_0$ to a terminal state at the end of the planning horizon of H time-steps. The mean cost obtained from K simulations is used as the fitness measure of $\hat{v}_w(s)$.

Lines 18 - 19: Initialise the start state to $s_0$ and start time-step to $t_0$.

Line 20: Get all permissible actions in start state $s_0$. These are all the permissible actions at decision-time $t_0$.

Line 21: For-loop generates all post-decision state variables (Line 24) given the actions permissible in start state $s_0$. The evolutionary simulation-based planner is going to approximate the state-value function for each post-decision state variable by computing the average cost of simulated trajectories starting at a post-decision state and extending for H time-steps into the future. The optimal decision is the action that results in the post-decision variable with the least average cost.

Lines 26 - 43: The for-loop allows to sample a simulated trajectory of states, actions and rewards till the end of the planning horizon of H time-steps. At every time-step, the algorithm uses $A(s)$ to get the set of permissible actions in the state s (Line 27) and predicts service demand for time-step t (Line 29) using simulation model $D(T)$. For each action in $A(s)$ the algorithm invokes the simulation model $S(D, R, T)$(Line 31), and transitions to a new state. The new state is then fed as input to the relative strength function and the returned value is assigned to variable ($\phi_i$ (Line 33). The softmax function is then used to map the elements of set $\Phi$ that holds all $\phi_i$ variables to a probability distribution over the corresponding actions (Lines 36-38). An action at the current time-step of the simulation is sampled using the generated probability distribution (Line 39), at which point the simulation model $S(D,R,T)$ is invoked (Line 40) and the simulation transitions to a new state (Line 41). The time-step is then incremented (Line 42).

Line 44: At the end of the simulation (after H time-steps) the cost function is invoked with the resulting state s as its argument and returns a real-valued scalar. The cost is assigned to decision-time action $r_0$.

Line 45: Statistic object is updated with the cost of the solution generated during the current simulation. Point estimates for mean, standard deviation, minimum and maximum cost are maintained.

Line 47: After K simulations, mean cost is assigned as fitness to current $\hat{v}_w(s)$ via a call to SET_FITNESS.

Line 48: STEADY STATE_REPLACEMENT replaces the worst genetic program (in terms of fitness) in the population of models by the newly sampled $\hat{v}_w(s)$.

Line 51 - 52: After running the evolutionary simulation-based planner for the allowed computational budget, the while loop exits. The action $r_0$ at decision-time $t_0$ that results in the post-decision state variable with the least mean cost is returned by a call to BEST_ACTION. The algorithm also returns the best $\hat{v}_w(s)$ learned so far via a call to EVO.GET_BEST().

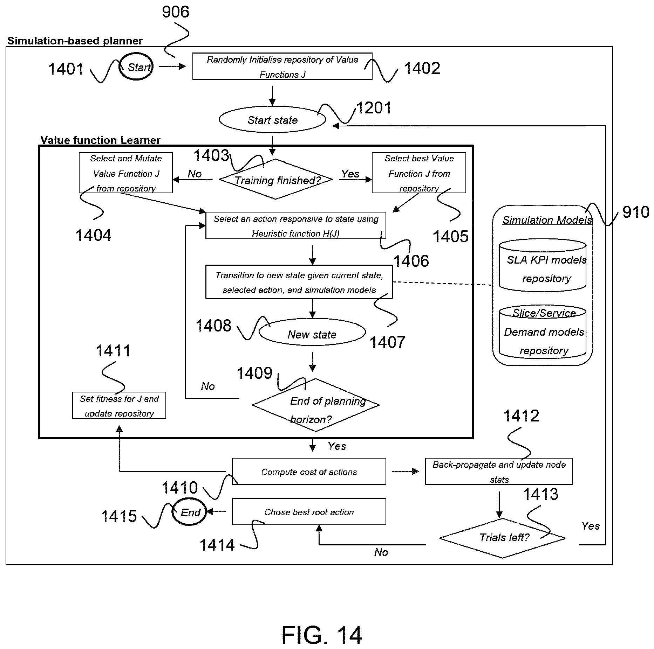

FIG. 14 illustrates a schematic representation of a flow chart for network resource allocation in a simulation-based planner 906 according to an embodiment. In operation 1401, procedure starts. In operation 1402, a repository of value functions J is randomly initialised. The functions may correspond to genetic programs. From the start state 1201, in operation 1403, the simulation-based planner 906 checks if training is finished. If the training is finished, the simulation-based planner 906 selects the best function from the repository in operation 1405. If the training is not finished, the simulation-based planner 906 mutates a value function from the repository. In operation 1406, the simulation-based planner 906 selects an action using a heuristic function $H(J)$, which may correspond to a rollout policy. In operation 1407, the simulation-based planner 906 simulates state paths using the simulation models 910 and selects a new state 1408 based on the simulation. In operation 1409, the simulation-based planner 906 checks if the planning horizon has been reached. If the planning horizon has not been reached, the simulation-based planner 906 can repeat operations 1406 - 1408 until the planning horizon is reached. If the planning horizon is reached, the simulation-based planner 906 computes a cost function on operation 1410 and sets fitness for the function *J* and updates the repository in operation 1411. In operation 1412, the simulation-based planner 906 performs backpropagation and updates node states. In operation 1413, the simulation-based planner 906 checks if there are trials left. If there are no trials left, the simulation-based planner 906 chooses the best action in operation 1414 and moves to an ending state 1415. If there are trials left, the simulation-based planner 906 moves back to the starting state 1201 and repeats the aforementioned operations.

The functionality described herein can be performed, at least in part, by one or more computer program product components such as software components. According to an embodiment, the network device 100 comprises the processor 101 configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs).

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items. The term 'and/or' may be used to indicate that one or more of the cases it connects may occur. Both, or more, connected cases may occur, or only either one of the connected cases may occur.

The operations of the methods described herein may be carried out in any suitable order, or simultaneously where appropriate. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, embodiments and data provide a complete description of the structure and use of exemplary embodiments.

## Claims

1. A network device (100), configured to:
   allocate network resources in a communication network according to a current state (1201), wherein the current state is represented by a state variable vector, wherein the state variable vector comprises at least one of:

   a plurality of key performance indicator, KPI, values representing a service level agreement, SLA, in a plurality of services;
   number of service requests for each service in the plurality of services; and
   number of resources allocated to each service in the plurality of services;
   determine a plurality of permissible actions (1202) from the current state, wherein each action in the plurality of permissible actions comprises a change to the current state;
   simulate a plurality of state paths for each action in the plurality of permissible actions, wherein each state path in the plurality of state paths comprises a plurality of consecutive actions (1204'), each of the consecutive actions (1204') causing a state change;
   calculate a cost value for each action in the plurality of permissible actions based on the corresponding plurality of state paths;
   choose an action from the plurality of permissible actions based on the cost value of each action in the plurality of permissible actions;
   transition to a new state by performing the chosen action; and
   allocate the network resources in the communication network according to the new state.

2. The network device (100) of claim 1, further configured to:
   calculate a cost value for each action in the plurality of permissible actions by predicting the cost associated with each action in the plurality of consecutive actions.

3. The network device (100) of any preceding claim, further configured to:

   form a probability distribution over the plurality of permissible actions based on the cost value of each action in the plurality of permissible actions; and
choose the action using the probability distribution.

4. The network device (100) of claim 3, further configured to:
choose the plurality of consecutive actions in each state path in the plurality of state paths according to the probability distribution.

5. The network device (100) of any claim 3-4, further configured to:
form the probability distribution using a genetic program which is a function composition represented by using a directed acyclic graph structure and being a point-wise application of a first function to a result of a second function to produce a third function.

6. The network device (100) of claim 5, wherein the genetic program is using an evolutionary algorithm configured to minimise an approximation of an expectation value of the cost value.

7. The network device (100) of any preceding claim, further configured to:
calculate the cost value for each action in the plurality of permissible actions based on a KPI value at an end (1206) of each state path in the corresponding plurality of state paths.

8. The network device (100) of any preceding claim, wherein the cost value of each action in the plurality of permissible actions is determined based on a service level agreement, SLA, and a corresponding KPI.

9. The network device (100) of any preceding claim, wherein the cost value for each action in the plurality of permissible actions is calculated using a service SLA KPI prediction model (912) and a service demand prediction model (913).

10. The network device (100) of claim 9, wherein the SLA KPI prediction model and/or the service demand prediction model is generated using sequence modelling (1006) and/or regression modelling (1007).

11. The network device (100) of claim 1, wherein the sequence modelling comprises at least one of:

recurrent neural networks;
autoregressive integrated moving average; and
hidden Markov model; and wherein the regression modelling comprises at least one of:

multi-layer feed-forward neural networks;
genetic programming; and

non-linear basis function expansion.

12. A method, comprising:
allocating (1101) network resources in a communication network according to a current state, wherein the current state is represented by a state variable vector, wherein the state variable vector comprises at least one of:

a plurality of key performance indicator, KPI, values representing a service level agreement, SLA, in a plurality of services;
number of service requests for each service in the plurality of services; and
number of resources allocated to each service in the plurality of services;
determining (1102) a plurality of permissible actions from the current state, wherein each action in the plurality of permissible actions comprises a change to the current state;
simulating (1103) a plurality of state paths for each action in the plurality of permissible actions, wherein each state path in the plurality of state paths comprises a plurality of consecutive actions, each of the consecutive actions (1204') causing a state change;
calculating (1104) a cost value for each action in the plurality of permissible actions based on the corresponding plurality of state paths;
choosing (1105) an action from the plurality of permissible actions based on the cost value of each action in the plurality of permissible actions;
transitioning (1106) to a new state by performing the chosen action; and
allocating (1107) the network resources in the communication network according to the new state.

13. A computer program comprising program code which, when the computer program is executed on a computer, causes the computer to carry out all the steps of the method according to claim 12.

**Patentansprüche**

1. Netzwerkvorrichtung (100), die zu Folgendem konfiguriert ist:
Zuweisen von Netzwerkressourcen in einem Kommunikationsnetzwerk gemäß einem aktuellen Zustand (1201), wobei der aktuelle Zustand durch einen Zustandsvariablenvektor dargestellt wird, wobei der Zustandsvariablenvektor mindestens eines von Folgendem umfasst:

eine Mehrzahl von Leistungskennzahl-, KPI-, Werten, die eine Dienstgütevereinbarung, SLA, in einer Mehrzahl von Diensten darstellen; eine Anzahl von Dienstanforderungen für jeden Dienst in der Mehrzahl von Diensten; und eine Anzahl von jedem Dienst in der Mehrzahl von Diensten zugewiesenen Ressourcen; Bestimmen einer Mehrzahl von zulässigen Aktionen (1202) aus dem aktuellen Zustand, wobei jede Aktion in der Mehrzahl von zulässigen Aktionen eine Änderung an dem aktuellen Zustand umfasst; Simulieren einer Mehrzahl von Zustandspfaden für jede Aktion in der Mehrzahl von zulässigen Aktionen, wobei jeder Zustandspfad in der Mehrzahl von Zustandspfaden eine Mehrzahl von aufeinanderfolgenden Aktionen (1204') umfasst, wobei jede der aufeinanderfolgenden Aktionen (1204') eine Zustandsänderung bewirkt; Berechnen eines Kostenwerts für jede Aktion in der Mehrzahl von zulässigen Aktionen basierend auf der entsprechenden Mehrzahl von Zustandspfaden; Auswählen einer Aktion aus der Mehrzahl von zulässigen Aktionen basierend auf dem Kostenwert jeder Aktion in der Mehrzahl von zulässigen Aktionen; Übergehen zu einem neuen Zustand durch Durchführen der ausgewählten Aktion; und Zuweisen der Netzwerkressourcen in dem Kommunikationsnetzwerk gemäß dem neuen Zustand.

2. Netzwerkvorrichtung (100) nach Anspruch 1, die ferner zu Folgendem konfiguriert ist: Berechnen eines Kostenwerts für jede Aktion in der Mehrzahl von zulässigen Aktionen durch Vorhersagen der mit jeder Aktion in der Mehrzahl von aufeinanderfolgenden Aktionen assoziierten Kosten.

3. Netzwerkvorrichtung (100) nach einem der vorhergehenden Ansprüche, die ferner zu Folgendem konfiguriert ist:

Ausbilden einer Wahrscheinlichkeitsverteilung über die Mehrzahl von zulässigen Aktionen basierend auf dem Kostenwert jeder Aktion in der Mehrzahl von zulässigen Aktionen; und Auswählen der Aktion unter Verwendung der Wahrscheinlichkeitsverteilung.

4. Netzwerkvorrichtung (100) nach Anspruch 3, die ferner zu Folgendem konfiguriert ist: Auswählen der Mehrzahl von aufeinanderfolgenden Aktionen in jedem Zustandspfad in der Mehrzahl von Zustandspfaden gemäß der Wahrscheinlichkeitsverteilung.

5. Netzwerkvorrichtung (100) nach einem der Ansprüche 3-4, die ferner zu Folgendem konfiguriert ist:

Ausbilden der Wahrscheinlichkeitsverteilung unter Verwendung eines genetischen Programms, das eine Funktionszusammensetzung ist, die durch Verwendung einer gerichteten, azyklischen Graphenstruktur dargestellt ist und eine punktweise Anwendung einer ersten Funktion auf ein Ergebnis einer zweiten Funktion, um eine dritte Funktion zu erzeugen, ist.

6. Netzwerkvorrichtung (100) nach Anspruch 5, wobei das genetische Programm einen evolutionären Algorithmus verwendet, der dazu konfiguriert ist, eine Annäherung eines Erwartungswerts des Kostenwerts zu minimieren.

7. Netzwerkvorrichtung (100) nach einem der vorhergehenden Ansprüche, die ferner zu Folgendem konfiguriert ist: Berechnen des Kostenwerts für jede Aktion in der Mehrzahl von zulässigen Aktionen basierend auf einem KPI-Wert an einem Ende (1206) jedes Zustandspfads in der entsprechenden Mehrzahl von Zustandspfaden.

8. Netzwerkvorrichtung (100) nach einem der vorhergehenden Ansprüche, wobei der Kostenwert jeder Aktion in der Mehrzahl von zulässigen Aktionen basierend auf einer Dienstgütevereinbarung, SLA, und einer entsprechenden KPI bestimmt wird.

9. Netzwerkvorrichtung (100) nach einem der vorhergehenden Ansprüche, wobei der Kostenwert für jede Aktion in der Mehrzahl von zulässigen Aktionen unter Verwendung eines Dienst-SLA-KPI-Vorhersagemodells (912) und eines Dienstnachfragevorhersagemodells (913) berechnet wird.

10. Netzwerkvorrichtung (100) nach Anspruch 9, wobei das SLA-KPI-Vorhersagemodell und/oder das Dienstnachfragevorhersagemodell unter Verwendung von Sequenzmodellierung (1006) und/oder Regressionsmodellierung (1007) erzeugt wird.

11. Netzwerkvorrichtung (100) nach Anspruch 1, wobei die Sequenzmodellierung mindestens eines von Folgendem umfasst:

rekurrente neuronale Netzwerke; einen integrierten automatisch-regressiv gleitenden Durchschnitt; und ein verdecktes Markov-Modell; und wobei die Regressionsmodellierung mindestens eines von Folgendem umfasst:

mehrschichtige vorwärtsgerichtete neuronale Netzwerke; eine genetische Programmierung; und eine nichtlineare Basisfunktionserweiterung.

12. Verfahren, das Folgendes umfasst:
Zuweisen (1101) von Netzwerkressourcen in einem Kommunikationsnetzwerk gemäß einem aktuellen Zustand, wobei der aktuelle Zustand durch einen Zustandsvariablenvektor dargestellt wird, wobei der Zustandsvariablenvektor mindestens eines von Folgendem umfasst:

eine Mehrzahl von Leistungskennzahl-, KPI-, Werten, die eine Dienstgütevereinbarung, SLA, in einer Mehrzahl von Diensten darstellen;
eine Anzahl von Dienstanforderungen für jeden Dienst in der Mehrzahl von Diensten; und
eine Anzahl von jedem Dienst in der Mehrzahl von Diensten zugewiesenen Ressourcen;
Bestimmen (1102) einer Mehrzahl von zulässigen Aktionen aus dem aktuellen Zustand, wobei jede Aktion in der Mehrzahl von zulässigen Aktionen eine Änderung an dem aktuellen Zustand umfasst;
Simulieren (1103) einer Mehrzahl von Zustandspfaden für jede Aktion in der Mehrzahl von zulässigen Aktionen, wobei jeder Zustandspfad in der Mehrzahl von Zustandspfaden eine Mehrzahl von aufeinanderfolgenden Aktionen umfasst, wobei jede der aufeinanderfolgenden Aktionen (1204') eine Zustandsänderung bewirkt;
Berechnen (1104) eines Kostenwerts für jede Aktion in der Mehrzahl von zulässigen Aktionen basierend auf der entsprechenden Mehrzahl von Zustandspfaden;
Auswählen (1105) einer Aktion aus der Mehrzahl von zulässigen Aktionen basierend auf dem Kostenwert jeder Aktion in der Mehrzahl von zulässigen Aktionen;
Übergehen (1106) zu einem neuen Zustand durch Durchführen der ausgewählten Aktion; und
Zuweisen (1107) der Netzwerkressourcen in dem Kommunikationsnetzwerk gemäß dem neuen Zustand.

13. Computerprogramm, das Programmcode umfasst, der, wenn das Computerprogramm auf einem Computer ausgeführt wird, den Computer dazu veranlasst, alle Schritte des Verfahrens nach Anspruch 12 auszuführen.

**Revendications**

1. Dispositif de réseau (100) configuré pour :
attribuer des ressources de réseau dans un réseau de communication en fonction d'un état actuel (1201), dans lequel l'état actuel est représenté par un vecteur de variable d'état, dans lequel le vecteur de variable d'état comprend au moins l'un des éléments suivants :

une pluralité de valeurs d'indicateurs clés de performance, KPI, représentant un accord de niveau de service, SLA, dans une pluralité de services ;
un nombre de demandes de service pour chaque service de la pluralité de services ; et
un nombre de ressources attribuées à chaque service de la pluralité de services ;
déterminer une pluralité d'actions autorisées (1202) à partir de l'état actuel, dans lequel chaque action de la pluralité d'actions autorisées comprend un changement de l'état actuel ;
simuler une pluralité de trajets d'état pour chaque action de la pluralité d'actions autorisées, dans lequel chaque trajet d'état de la pluralité de trajets d'état comprend une pluralité d'actions consécutives (1204'), chacune des actions consécutives (1204') entraînant un changement d'état ;
calculer une valeur de coût pour chaque action de la pluralité d'actions autorisées sur la base de la pluralité correspondante de trajets d'état ;
choisir une action parmi la pluralité d'actions autorisées sur la base de la valeur de coût de chaque action de la pluralité d'actions autorisées ;
transitionner à un nouvel état en exécutant l'action choisie ; et
attribuer les ressources de réseau dans le réseau de communication en fonction du nouvel état.

2. Dispositif de réseau (100) selon la revendication 1, configuré en outre pour :
calculer une valeur de coût pour chaque action de la pluralité d'actions autorisées en prédisant le coût associé à chaque action de la pluralité d'actions consécutives.

3. Dispositif de réseau (100) selon l'une quelconque des revendications précédentes, configuré en outre pour :

former une distribution de probabilité sur la pluralité d'actions autorisées sur la base de la valeur de coût de chaque action de la pluralité d'actions autorisées ; et
choisir l'action au moyen de la distribution de probabilité.

4. Dispositif de réseau (100) selon la revendication 3, configuré en outre pour :
choisir la pluralité d'actions consécutives dans chaque trajet d'état de la pluralité de trajets d'état en fonction de la distribution de probabilité.

**5.** Dispositif de réseau (100) selon l'une quelconque des revendications 3 et 4, configuré en outre pour : former la distribution de probabilité au moyen d'un programme génétique qui est une composition de fonctions représentée par l'utilisation d'une structure de graphe acyclique dirigé et qui est une application de disponibilité d'une première fonction à un résultat d'une deuxième fonction pour produire une troisième fonction.

**6.** Dispositif de réseau (100) selon la revendication 5, dans lequel le programme génétique utilise un algorithme évolutif configuré pour minimiser une approximation d'une valeur d'attente de la valeur de coût.

**7.** Dispositif de réseau (100) selon l'une quelconque des revendications précédentes, configuré en outre pour : calculer la valeur de coût pour chaque action de la pluralité d'actions autorisées sur la base d'une valeur de KPI à une extrémité (1206) de chaque trajet d'état de la pluralité correspondante de trajets d'état.

**8.** Dispositif de réseau (100) selon l'une quelconque des revendications précédentes, dans lequel la valeur de coût de chaque action de la pluralité d'actions autorisées est déterminée sur la base d'un accord de niveau de service, SLA, et d'un KPI correspondant.

**9.** Dispositif de réseau (100) selon l'une quelconque des revendications précédentes, dans lequel la valeur de coût pour chaque action de la pluralité d'actions autorisées est calculée au moyen d'un modèle de prédiction de KPI de SLA (912) et d'un modèle de prédiction de demande de service (913).

**10.** Dispositif de réseau (100) selon la revendication 9, dans lequel le modèle de prédiction de KPI de SLA et/ou le modèle de prédiction de demande de service sont générés au moyen d'une modélisation de séquence (1006) et/ou d'une modélisation de régression (1007).

**11.** Dispositif de réseau (100) selon la revendication 1, dans lequel la modélisation de séquence comprend au moins l'un des éléments suivants :

des réseaux neuronaux récurrents ;
une moyenne mobile intégrée autorégressive ; et
un modèle de Markov caché ; et dans lequel la modélisation de régression comprend au moins l'un des éléments suivants :

des réseaux neuronaux non récurrents multicouches ;
une programmation génétique ; et
une extension de fonction de base non linéaire.

**12.** Procédé comprenant :
l'attribution (1101) de ressources de réseau dans un réseau de communication en fonction d'un état actuel, dans lequel l'état actuel est représenté par un vecteur de variable d'état, dans lequel le vecteur de variable d'état comprend au moins l'un des éléments suivants :

une pluralité de valeurs d'indicateurs clés de performance, KPI, représentant un accord de niveau de service, SLA, dans une pluralité de services ;
un nombre de demandes de service pour chaque service de la pluralité de services ; et
un nombre de ressources attribuées à chaque service de la pluralité de services ;
la détermination (1102) d'une pluralité d'actions autorisées à partir de l'état actuel, dans lequel chaque action de la pluralité d'actions autorisées comprend un changement de l'état actuel ;
la simulation (1103) d'une pluralité de trajets d'état pour chaque action de la pluralité d'actions autorisées, dans lequel chaque trajet d'état de la pluralité de trajets d'état comprend une pluralité d'actions consécutives, chacune des actions consécutives (1204') entraînant un changement d'état ;
le calcul (1104) d'une valeur de coût pour chaque action de la pluralité d'actions autorisées sur la base de la pluralité correspondante de trajets d'état ;
le choix (1105) d'une action parmi la pluralité d'actions autorisées sur la base de la valeur de coût de chaque action de la pluralité d'actions autorisées ;
la transition (1106) à un nouvel état en exécutant l'action choisie ; et
l'attribution (1107) des ressources de réseau dans le réseau de communication en fonction du nouvel état.

**13.** Programme informatique comprenant un code de programme qui, lorsque le programme informatique est exécuté sur un ordinateur, amène l'ordinateur à exécuter toutes les étapes du procédé selon la revendication 12.

100

Network device

Processor — 101

Memory — 102

FIG. 1

200

201 — (+)

202 — (4)   (*) — 201

202 — (2)   (pow) — 201

202 — (X)   (3) — 202

FIG. 2

x+1

FIG. 3

x+(x*2)

FIG. 4

$x^2 +1$

FIG. 5

600

```
Procedure: Generate_Random_Program (F, T, MAX_DEPTH, T_PROB)
  IF ( MAX_DEPTH=0 OR rand()<T_PROB ) THEN
    EXPR := CHOOSE_RAND_ELEMENT(T)
  ELSE
    FUNC := CHOSE_RAND_ELEMENT(F)
    FOR( i =1 to ARITY(FUNC) ) DO
      ARG_i =  GENERATE_RANDOM_PROGRAM( F, T, MAX-DEPTH-1 )
    END FOR
  expr := (F, ARG_1, ARG_2, ...)
  END IF
  RETURN expr
```

FIG. 6

FIG. 7

FIG. 8

FIG. 9

FIG. 10

1101 — Allocate network resource according to current state

1102 — Determine permissible actions

1103 — Simulate state paths for each action

1104 — Cost value for each action

1105 — Choose action

1106 — Perform action

1107 — Allocate resources according to new state

## FIG. 11

FIG. 12

1300

```
1   Set PopulationOfGeneticPrograms ← { };
2   for i := 1 to PopulationSize do
3   |   RelativeStrengthFunction v̂_w ←
    |       GENERATE_RANDOM_PROGRAM(FunctionSet, TerminalSet,
    |       MaxProgramSize);
4   |   PopulationOfGeneticPrograms.ADD(p);
5   end
6   while within computational budget do
7   |   RelativeStrengthFunction v̂_w ← null;
8   |   Set notEvalPop ← NOT_EVALUATED(PopulationOfGeneticPrograms);
9   |   if notEvalPop not empty then
10  |   |   v̂_w ← CHOOSE_UNIFORM_RANDOMLY(notEvalPop);
11  |   else
12  |   |   Set tournament ←
    |   |       CREATE_TOURNAMENT(PopulationOfGeneticPrograms,
    |   |       TournamentSize);
13  |   |   v̂_w ← TOURNAMENT_SELECTION(tournament);
14  |   |   v̂_w ← MUTATE_PROGRAM(p);
15  |   end
16  |   Statistics stats ← new Statistics();
17  |   for m := 1 to K do
18  |   |   TimeStamp t ← t_0;
19  |   |   State s ← s_0;
20  |   |   Set ResourceAllocationActions ← A(s);
21  |   |   for each Action r_0 ∈ ResourceAllocationActions do
22  |   |   |   Demand d_t ← D(t);
23  |   |   |   SLA^t_{KPI} ← S(d_t, r_0, t);
24  |   |   |   s ← New_State(SLA^t_{KPI}, d_t, r_0);
25  |   |   |   t ← MOVE_NEXT_TIMESTEP(t);
26  |   |   |   for h := 1 to H do
27  |   |   |   |   ResourceAllocationActions ← A(s);
28  |   |   |   |   Set Φ ← { };
29  |   |   |   |   Demand d_t ← D(t);
30  |   |   |   |   for each Action r_t ∈ ResourceAllocationActions do
31  |   |   |   |   |   SLA^t_{KPI} ← S(d_t, r_t, t);
32  |   |   |   |   |   State s' ← New_State(SLA^t_{KPI}, d_t, r_t);
33  |   |   |   |   |   φ_i ← v̂_w(s');
34  |   |   |   |   |   Φ.ADD(φ_i);
35  |   |   |   |   end
36  |   |   |   |   for each relative strength φ_i ∈ Φ do
37  |   |   |   |   |   P(φ_i) = \frac{e^{φ_i}}{\sum_{j=1}^{Φ.size} e^{φ_j}}
38  |   |   |   |   end
39  |   |   |   |   Action r' ←
    |   |   |   |       SAMPLE_ACTION_USING_DISTRIBUTION_P();
40  |   |   |   |   SLA^t_{KPI} ← S(d_t, r', t);
41  |   |   |   |   s ← New_State(SLA^t_{KPI}, d_t, r');
42  |   |   |   |   t ← MOVE_NEXT_TIMESTEP(t);
43  |   |   |   end
44  |   |   |   r_0.cost ← GET_COST(s);
45  |   |   |   UPDATE_STATS(v̂_w, stats, cost);
46  |   |   end
47  |   |   EVO.SET_FITNESS(v̂_w, stats.getMean());
48  |   |   EVO.STEADY_STATE_REPLACEMENT(v̂_w);
49  |   end
50  end
51  return r_0 ← BEST_ACTION(A(s_0));
52  return v̂_w ← EVO.GET_BEST();
```

## FIG. 13

**Simulation-based planner** 906

1401 — Start → Randomly Initialise repository of Value Functions J 1402

Start state 1201

**Value function Learner**

Select and Mutate Value Function J from repository 1404 ← No — Training finished? 1403 — Yes → Select best Value Function J from repository 1405

Select an action responsive to state using Heuristic function H(J) 1406

Transition to new state given current state, selected action, and simulation models

1408 — New state 1407

No

End of planning horizon? 1409

1411 Set fitness for J and update repository

**Simulation Models** 910

SLA KPI models repository

Slice/Service Demand models repository

Yes

Compute cost of actions 1410 → Back-propagate and update node stats 1412

1415 — End ← Chose best root action 1414

Trials left? 1413 — Yes

No

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1693748 A2